# EUROPEAN PATENT APPLICATION

(11) **EP 4 793 026 A1**
(43) Date of publication of application: **19.08.2026**
(21) Application number: 23956608.6
(22) Date of filing: 20.11.2023
(51) Int. Cl.: B29C 70/34, B29C 70/54

(54) **WIND TURBINE BLADE, AND MANUFACTURING APPARATUS AND FORMING METHOD THEREFOR**

(30) Priority: 24.10.2023 CN 202311387797
(71) Applicant: Sinoma Wind Power Blade Co., Ltd., Beijing 100192 (CN)
(72) Inventor: XU, Youmu, Beijing 100192 (CN); LIU, Yan, Beijing 100192 (CN); XIANG, Taocheng, Beijing 100192 (CN); WANG, Yongquan, Beijing 100192 (CN); ZHAO, Liyan, Beijing 100192 (CN)
(74) Representative: IPrime Bonnekamp Sparing Patentanwaltsgesellschaft mbH
(86) International application number: PCT/CN2023/132749
(87) International publication number: WO 2025/086371

(57) **Abstract**

Disclosed in the present application are a wind turbine blade, and a manufacturing apparatus and forming method therefor. The manufacturing apparatus comprises a blade resin injection assembly, the blade resin injection assembly comprising a resin injection connector group and a flow guide layer group. The resin injection connector group comprises at least one resin injection connector, and each resin injection connector comprises an accommodating portion and a discharge pipe that are connected to each other, the accommodating portion being connected to a resin injection device. The flow guide layer group comprises at least one flow guide layer, the flow guide layer being laid on the surface of a structural cloth layer component, and edges of each flow guide layer being arranged corresponding to the resin injection connectors and being directly connected to the resin injection connectors. The embodiments of the present application directly connect the resin injection connectors having a certain volume to a flow guide mesh, so that the number of resin injection openings can be effectively reduced and the arrangement of the resin injection openings can be more concentrated, which facilitates supervision. Avoiding infusion channels reduce the waste of a filling agent; in addition, after the flow guide mesh receives the filling agent delivered by the resin injection connectors, the filling agent can be uniformly distributed on the whole flow guide mesh without the need of specially controlling the corresponding flowing sequence.

## Description

### CROSS-REFERENCE TO RELATED APPLICATIONS

This application claims priority to Chinese Patent Application No. 202311387797.0, entitled "WIND TURBINE BLADE, AND MANUFACTURING APPARATUS AND FORMING METHOD THEREFOR", and filed on October 24, 2023, which is hereby incorporated by reference in its entirety.

### TECHNICAL FIELD

The present disclosure relates to the field of wind power technology, and particularly to a wind turbine blade, a manufacturing equipment therefore and a manufacturing method thereof.

### BACKGROUND

Wind turbine blades are important parts of the wind turbine generator system. With the introduction of novel composite materials into the design and manufacturing fields of the wind turbine blades, the manufacturing process of the wind turbine blades has also undergone significant changes. The components and shell skin infusion system of a wind turbine blade generally includes a flow mesh, a channel, and a resin injection port. The filler discharge port is connected to the resin injection port on the channel. Under the action of vacuum negative pressure, the filler first fills the entire channel, and then disperses onto the flow mesh. The flow mesh is in a surface contact with a preform layer structure on a blade shell to supply the filler to the preform layer structure.

However, manufacturing large blades using the above infusion system requires to increase the number of axial channels and resin injection ports. With many channels provided in the blade infusion system increases the consumption of filler material. Due to different opening and closing sequences of the various channels, infusion reverse wrapping easily occurs. A large number of runners need to be laid by workers within the cavity, which can easily cause wrinkles or other types of defects in the preform within the cavity when stepped by the workers. For the grouting operations for large wind turbine blades, the infusion methods in the related art adopts the conventional technical approach to integrate and improve the channels in the vacuum infusion system, which still widely applies the infusion layout of "resin injection port + filler runner + flow mesh." The infusion methods in the related art still rely on channels and have not yet resolved the defects caused by the increased number of channels. Therefore, there is an urgent need to propose a wind turbine blade and a manufacturing equipment therefor and a manufacturing method thereof, aiming to solve the above technical problems to a certain extent.

### SUMMARY

Embodiments of the present disclosure provide a wind turbine blade, a manufacturing equipment for the wind turbine blade, and a manufacturing method of the wind turbine blade. With a point-to-surface infusion process, the channels can be eliminated, thereby avoid the defect of the blade infusion system utilizing channels to connect resin injection ports with the flow mesh, while ensuring uniform penetration of resin in the flow mesh.

In one aspect, some embodiments of the present disclosure provide a manufacturing equipment for a wind turbine blade. The manufacturing equipment includes a blade resin injection assembly, and the blade resin injection assembly includes a resin injection connector group and a distribution layer group. The resin injection connector group includes at least one resin injection connector, and each of the at least one resin injection connector includes a storage part and a discharge pipe that are connected to each other. The storage part is connected to a resin injection machine, and the resin injection machine is configured to inject a filler into the storage part through a connecting tube. The distribution layer group includes at least one distribution layer. Each of the at least one distribution layer is laid on a surface of a structural fabric component, has an edge corresponding to one resin injection connector of the at least one resin injection connector, and is directly connected to the resin injection.

According to an aspect of some embodiments of the present disclosure, the blade resin injection assembly further includes an insulation layer sandwiched between the distribution layer and the structural fabric component, the storage part has a certain volume and is configured to store a corresponding volume of the filler in such a manner that the filler smoothly passes through the at least one distribution layer and the insulation layer in sequence at a uniform speed.

According to an aspect of some embodiments of the present disclosure, the manufacturing equipment further includes a mold group including at least two molds, the distribution layer group is conformably laid in cavities of the at least two molds, and the resin injection connector group is disposed at an end of the distribution layer group that extends along free ends of the at least two molds.

According to an aspect of some embodiments of the present disclosure, the distribution layer includes a first flow mesh, the filler sequentially flows through the storage part, the discharge pipe, and the first flow mesh in the blade resin injection assembly, and the filler gradually permeates through the first flow mesh after entering the first flow mesh, and then uniformly disperses over an entirety of the first flow mesh.

According to an aspect of some embodiments of the present disclosure, the first flow mesh includes a main body and protruding parts each protruding outward from a peripheral edge of the main body, the protruding parts are spaced apart from each other along a peripheral of the main body, and the protruding parts are provided with resin injection ports, respectively. The resin injection connector group includes a plurality of the resin injection connectors that is in one-to-one correspondence with the resin injection ports and that is directly connected to the resin injection ports, respectively. The protruding parts each have a size of 150 mm * 200 mm.

According to an aspect of some embodiments of the present disclosure, the first flow mesh is a two-dimensional structure having a preset length-to-width ratio. A spacing H between adjacent ones of the resin injection ports in a length direction of the first flow mesh has a preset mapping relationship with a thickness D1 of a blade to be prepared and is inversely proportional to a thickness D2 of the structural fabric component. The spacing H satisfies: 500 mm ≤ H ≤ 10000 mm.

According to an aspect of some embodiments of the present disclosure, the manufacturing equipment for the wind turbine blade includes a plurality of the blade resin injection assemblies. A blade resin injection assembly of the plurality of the blade resin injection assemblies in a blade root area of the blade is arranged in such a manner that each of a leading edge and a trailing edge of a root flange is provided with one of the resin injection ports, and a spacing between adjacent ones of the resin injection ports at each of a leading edge and a trailing edge of an end-surface flange ranges from 250 mm to 1000 mm. The blade resin injection assemblies of the plurality of the blade resin injection assemblies for a blade shell skin and a blade shear web are arranged in such a manner that a spacing between adjacent ones of the resin injection ports at each of a leading edge and a trailing edge of each of a leading edge flange and a trailing edge flange ranges from 4000 mm to 8000 mm.

According to an aspect of some embodiments of the present disclosure, the blade resin injection assembly in a blade root area of the blade is arranged, the distribution layer includes a second flow mesh and two flange flow meshes, the second flow mesh is laid on an inner peripheral surface of a cavity, the two flange flow meshes are laid on surfaces of a frustum and are symmetrical with respect to the second flow mesh, and two sides of the second flow mesh overlap the two flange flow meshes in a width direction of the second flow mesh, respectively, by an overlap length ranging from 30 mm to 50 mm.

In another aspect, some embodiments of the present disclosure provide a manufacturing method of a wind turbine blade. The manufacturing method includes: constructing at least two to-be-spliced modules, and splicing the at least two to-be-spliced modules to form the wind turbine blade. The constructing the at least two to-be-spliced modules is performed by the above manufacturing equipment, and includes: first, laying a vacuum pumping system; then, sequentially laying and adjusting a peel ply and the structural fabric component on a mold; laying the blade resin injection assembly on a side of the structural fabric component away from the mold; and injecting the filler into the structural fabric component by the resin injection machine through the blade resin injection assembly. The filler is resin.

In a further aspect, some embodiments of the present disclosure provide a wind turbine blade manufactured using the above manufacturing method.

The wind turbine blade, the manufacturing equipment for the wind turbine blade, and the manufacturing method of the wind turbine blade according to the embodiments of the present disclosure can directly connect the resin injection connector with a certain volume with the flow mesh, the number of the resin injection ports can be effectively reduced, and the resin injection ports are arranged more densely, which is conducive to supervision. Without channels, waste of the filler can be avoided. After the flow mesh receives the filler transferred from the resin injection connector, there is no need to specially control the corresponding flow sequence, and the filler can be uniformly distributed over the entire flow mesh.

### BRIEF DESCRIPTION OF THE DRAWINGS

The features, advantages, and technical effects of exemplary embodiments of the present disclosure will be described below with reference to the accompanying drawings.
Fig. 1 is a perspective view of a resin injection connector according to some embodiments of the present disclosure;
Fig. 2 is a schematic diagram of a spar cap infusion module according to some embodiments of the present disclosure;
Fig. 3 is a schematic diagram of a blade root infusion module according to some embodiments of the present disclosure;
Fig. 4 is a cross-sectional view of a shell skin infusion module according to some embodiments of the present disclosure;
Fig. 5 is a cross-sectional view of a shear web infusion module according to some embodiments of the present disclosure;
Fig. 6 is a flowchart of manufacturing a wind turbine blade according to some embodiments of the present disclosure; and
Fig. 7 is a flowchart of constructing to-be-spliced modules according to some embodiments of the present disclosure.

In the drawings, the drawings are not necessarily drawn in actual scale.

### Reference numerals:

spacing between resin injection ports, H; blade thickness, D1;
thickness of structural fabric component, D2;
storage part, 1; discharge pipe, 2; resin injection machine, 3; connecting tube, 4;
distribution layer, 5; first flow mesh, 51; second flow mesh, 52;
flange flow mesh, 53;
structural fabric component, 6; mold, 7; resin injection port, 8; vacuum pumping system, 9.

### DETAILED DESCRIPTION

To make the objectives, technical solutions, and advantages of the embodiments of the present disclosure clearer, the technical solutions in the embodiments of the present disclosure will be clearly described below in conjunction with the accompanying drawings in the embodiments of the present disclosure. Obviously, the described embodiments are some of the embodiments of the present disclosure, not all of the embodiments. Based on the embodiments in the present disclosure, all other embodiments obtained by those skilled in the art without creative efforts fall within the protection scope of the present disclosure.

Unless otherwise defined, all technical and scientific terms used herein have the same meanings as those commonly understood by those skilled in the art to which the present disclosure belongs. The terms used in the specification of the present disclosure are merely for the purpose of describing specific embodiments and are not intended to limit the present disclosure. The terms "include" and "have" as well as their variations, in the specification and claims of the present disclosure, as well as the above description of the drawings, are intended to cover non-exclusive inclusion. Terms such as "first" and "second" in the specification and claims of the present disclosure, or in the above description of the drawings are used to distinguish between different objects, rather than to describe a specific order or primary-secondary relationship.

The present disclosure is based on the inventor's discoveries and understandings of the following facts and problems:

A wind turbine blade is an important component that has an aerodynamic profile and that can receive and capture wind energy to generate power. Components such as a spar cap, shear webs, and shell skin are disposed in the wind turbine blade. Since the blade directly faces the wind to obtain wind energy, the blades are required to have a reasonable structure and be manufactured with suitable materials and processes, such that the blades can reliably bear various bending moments and tensile forces imposed on the blades by wind forces and self-weight centrifugal forces.

According to the structural characteristics of the wind turbine blade and the loading conditions during operation, various parts of the wind turbine blade are defined as a blade root, a blade tip, a leading edge, a trailing edge, a pressure side, and a suction side. The blade root is a part of the wind turbine that connects a blade to a hub, and the blade root has two forms of a pre-embedded structure and a post-drilled hole structure. The blade tip is a part of the blade furthest from a wind energy rotation axis and is an end part along a length direction of the wind turbine blade (relative to the blade root). The leading edge refers to a foremost part of an airfoil in a rotation direction, and the trailing edge refers to a rearmost part of the airfoil in the rotation direction. The pressure side is a surface of the blade facing the wind, also called a pressure surface, and the suction side is a surface of the blade facing away from the wind, also called a suction surface.

A laminated structure of the shell skin, the spar cap, and the shear web forms a classic structure of the wind turbine blade. When manufacturing the blade, resin is generally used as a matrix material, and fibers and fabric are used as reinforcing materials. Impregnation, preforming, and hot-mold curing are performed under traction of external force, and then a product with a continuous and regular cross-section is finally formed. When using the resin as the filler to infuse fiber layers of various components, in the related art, a "point + line + surface" infusion layout is generally adopted, i.e., "resin injection port + channel + flow mesh". Specifically, when manufacturing the various components of the blade modularly, the resin is injected into the resin injection ports using a resin injection machine, the resin flows through channels to disperse to various parts of the component and then penetrates through the flow mesh to enter a structural fabric component (fiber layer) of the component, and the resin cures exothermically after fully impregnating the fiber layer. The channel is a feed tube for blade resin infusion, and the channel mainly adopts an axial tube layout method (i.e., along the length direction of the blade). However, due to the pressure gradient, to ensure the infusion rate, an axial runner needs to be arranged at certain intervals. Relay infusion is formed between the axial runners, that is, after completing infusion in one axial tube, the next axial runner is opened.

As the design power of blades increases, a maximum chordwise length of the blades becomes wider, and the number of the axial runners also increases, which easily causes the following problems.
1. Excessive resin injection ports are provided. A single blade of 5 MW has a total of about 30 to 50 resin injection ports. During the infusion process, if tubes are not open and closed in time, air bubbles may easily enter, causing quality problems such as product whitening and air bubbles.
2. The positions of resin injection ports are too scattered, which easily leads to quality problems. The resin injection ports are scattered in multiple areas, which is not conducive to supervision. Moreover, too many ohm tubes are arranged for a single blade, and in this case, due to different opening sequences of the axial runners, infusion reverse wrapping easily occurs.
3. The design of a large number of channels causes excessive waste of resin, increases the consumption of resin material, and a large number of runners needs to be laid by workers in the cavity, which may easily cause wrinkles or other types of defects on the preform in the cavity when stepped by the workers.

The infusion systems for large wind turbine blades in the related art simply use conventional technical means to integrate and improve the resin injection runners in the vacuum infusion system, and still widely employ the "point + line + surface" infusion layout, i.e., resin injection ports + resin runners + flow mesh. However, these infusion systems have not eliminated resin runners to achieve the purpose of directly connecting the resin injection ports and the flow mesh for infusion, and thus have not completely solved the problems.

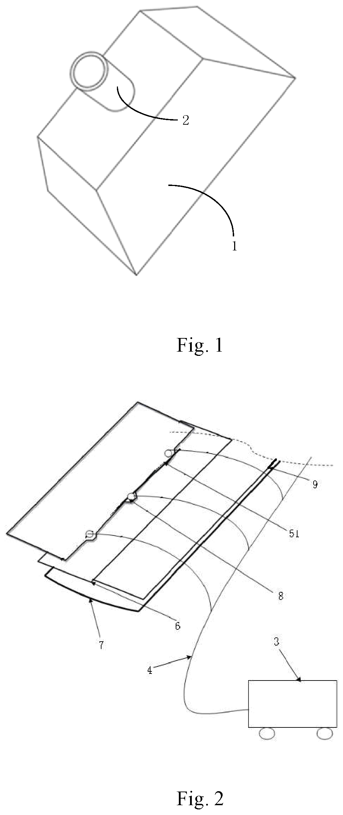

To solve the above problems, some embodiments of the present disclosure provide a wind turbine blade, a manufacturing equipment for the wind turbine blade, and a manufacturing method of the wind turbine blade. The wind turbine blade, the manufacturing equipment for the wind turbine blade, and the manufacturing method of the wind turbine blade according to embodiments of the present disclosure will be further described in detail below with reference to Fig. 1 to Fig. 7.

The embodiments of the present disclosure provides a manufacturing equipment for a wind turbine blade, which can be used to manufacture ultra-large wind turbine blades. The manufacturing equipment includes a blade resin injection assembly. The blade resin injection assembly includes a resin injection connector group and a distribution layer group directly connected to each other. The solution in the embodiments of the present disclosure eliminates channels. After the distribution layer group receives the filler transmitted from the resin injection connector group, the filler can be uniformly distributed over the entire distribution layer group, with no need for special control of the flow sequence of the filler.

Specifically, the resin injection connector group includes at least one resin injection connector. As shown in Fig. 1, the resin injection connector includes a storage part 1 and a discharge pipe 2 connected to each other. The storage part 1 is a conical cavity with a preset volume. The storage part is connected to a resin injection machine 3, and the resin injection machine is configured to inject a filler into the storage part 1 through a connecting tube 4. One end of the connecting tube 4 is installed on the resin injection machine 3, and the other end of the connecting tube 4 can have a preset number of branches. These branches are dispersed, with each branch corresponding to one resin injection connector and being connected to one storage part 1. After entering the storage part 1, under pressure, the filler flows through the discharge pipe 2 and then flows out of the discharge pipe 2. The distribution layer group includes at least one distribution layer 5. The distribution layer 5 is laid on a surface of a structural fabric component 6. An edge of each distribution layer 5 corresponds to the resin injection connector and is directly connected to the resin injection connector. Multiple resin injection connectors are arranged on the distribution layer 5 according to a preset rule, and no channel is provided between the distribution layer 5 and the resin injection connectors.

Therefore, it can be understood that in the entire blade resin injection assembly of the manufacturing equipment, the arrangement of the distribution layer 5 and the resin injection connector and the structure of the resin injection connector are optimized and improved, which can ensure stable and uniform filling, penetration, and impregnation of the filler throughout the distribution layer 5 without channels, solely through the cooperation between the resin injection connectors and the distribution layer 5, thereby avoiding problems such as infusion reverse wrapping and material waste caused by an increased number of channels during the manufacturing of large wind turbine blades. At the same time, since there is no need to lay channels, problems such as stepped wrinkles of the preform in the cavity when the runner is manually laid are also avoided.

In other optional embodiments, the storage part 1 can be configured as a cavity of another shape with a preset volume (not shown in the drawings).

In some embodiments, the blade resin injection assembly further includes an insulation layer (not shown in the drawings). The insulation layer is made of a permeable separation medium and is sandwiched between the distribution layer 5 and the structural fabric component 6. The storage part 1 has a certain volume and is configured to store a corresponding volume of the filler, such that the filler smoothly passes through the at least one distribution layer and the insulation layer in sequence at a uniform speed.

The insulation layer is used in conjunction with the distribution layer 5, and the filler can smoothly penetrate through the insulation layer. In addition, since the storage part 1 has a certain volume, the storage part 2 can provide an intermediate buffer chamber for the filler in a flowing state. The intermediate buffer chamber can replace the channels in conventional infusion systems and can store the filler of a volume corresponding to that in conventional channels.

It can be understood that the insulation layer is mainly configured to separate the distribution layer 5 and the structural fabric component 6. By providing the insulation layer on the side of the distribution layer 5 opposing to the structural fabric component 6, the difficulty of tearing off the distribution layer 5 after the infusion stage and the fixing stage can be reduced. The insulation layer can further ensure complete separation of the distribution layer 5 and the structural fabric component 6, which is conducive to the recycling of the distribution layer 5. In addition, since the storage part 2 can store a certain amount of filler, when the supply rate of filler from the resin injection machine 3 is unstable or interrupted, the filler stored in the storage part 2 can be timely replenished and discharged from the discharge pipe 2. By disposing the storage part 1 with a preset volume, the stability of the process of supplying filler to the distribution layer 5 can be ensured.

In some embodiments, the manufacturing equipment for the wind turbine blade includes a mold group. The mold group includes two or more molds 7. The distribution layer group is conformably laid in the cavities of the molds 7. The resin injection connector group is arranged at an end of the distribution layer group that extends along free ends of the molds 7.

When operators infuse in different areas and infuse different modules, the corresponding molds 7 are also different. For example, when constructing a spar cap infusion module, a blade root infusion module, a shell skin infusion module, and a shear web infusion module, corresponding molds 7 will be arranged separately to meet specific needs. The manufacturing equipment includes different infusion system models. When arranging a specific infusion system model, operators first lays a peel ply on the inner wall of the mold 7, lays the corresponding structural fabric component, then arranges the insulation layer and the distribution layer group, and finally arrange the resin injection connector group in the area of the distribution layer group extending out of the mold 7.

It can be understood that when manufacturing different components of the wind turbine blades, such as the spar cap, root, shell skin, and shear web, operators may arrange different molds 7 according to the design requirements of different components. After the mold 7 is fixed to the operating surface, specified layers, the distribution layer group, and the resin injection connector group required for subsequent infusion construction are sequentially laid in the mold 7. Different components, such as the spar cap, blade root, blade shell skin, and shear web, are manufactured by performing infusion operations on different molds 7.

In some embodiments, the distribution layer includes a first flow mesh 51. The filler sequentially flows through the storage part 1, the discharge pipe 2, and the first flow mesh 51 in the blade resin injection assembly. After entering the first flow mesh 51, the filler gradually penetrates and is uniformly dispersed over the entire first flow mesh 51. As shown in Fig. 2, the first flow mesh 51 includes a main body and protruding parts each protruding outward from a peripheral edge of the main body. The protruding parts are spaced apart from each other along a peripheral side of the main body, and each protruding part is provided with a resin injection port 8. The resin injection connectors are in one-to-one correspondence with the resin injection ports 8 and are directly connected to the resin injection ports 8, respectively. The protruding part has a size of 150 mm * 200 mm.

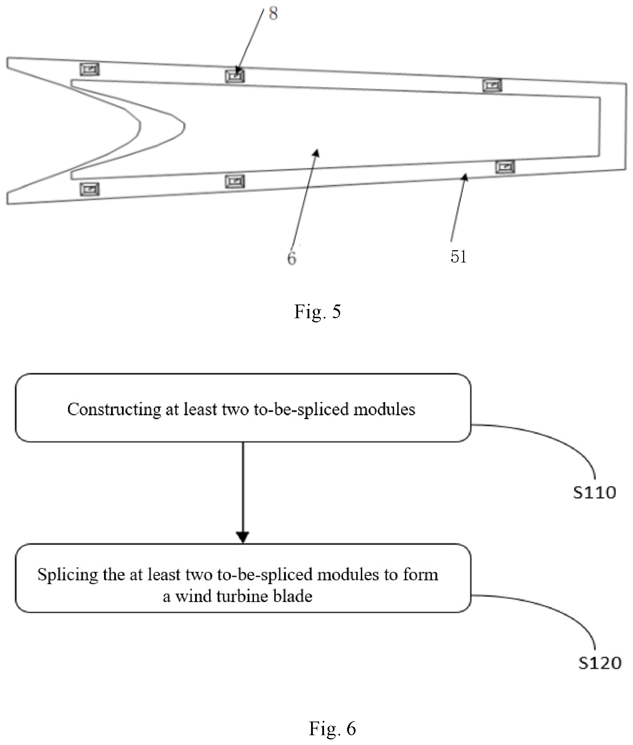

When arranging the spar cap infusion module, shell skin infusion module, and shear web infusion module, operators are adapted to lay the first flow mesh 51 at the inside of the corresponding mold 7. As shown in Fig. 5, when establishing the shear web infusion module, the first flow mesh 51 extends out of an outer edge of the structural fabric component 6. The protruding parts are provided to facilitate to forming the resin injection ports 8, thereby facilitating the arrangement and installation of resin injection connectors on the first flow mesh 51. When manufacturing the first flow mesh 51, the protruding parts with different layouts are arranged according to the different placement positions of the first flow mesh 51. For example, there are certain differences in the first flow mesh 51 laid on the spar cap infusion module and the shell skin infusion module. The number and layout style of the protruding parts are adjusted according to the needs of different modules, but each protruding part is connected to one resin injection connector through one resin injection port formed thereon.

It can be understood that in the manufacturing equipment for wind turbine blades, different infusion modules correspond to different first flow meshes 51, but the main body of all first flow meshes 51 extends beyond the outer edge of the structural fabric component 6 of the corresponding module, thereby ensuring that the structural fabric component 6 is completely covered by the first flow mesh 51. Under pressure, the filler flows out of the resin injection connectors and enters the first flow mesh 51 through the resin injection ports provided on the protruding parts. The filler gradually penetrates and immerses the entire first flow mesh 51, and continues to penetrate towards the side of the structural fabric component 6 until the structural fabric component 6 is immersed and filled with the filler. During the entire process of filler flow and penetration, there is no need to specially control the penetration direction. After being discharged from the resin injection connectors under pressure and gravity, the filler can gradually and uniformly diffuse in the first flow mesh 51.

In some embodiments, as shown in Fig. 2, the first flow mesh 51 is a two-dimensional structure with a preset length-to-width ratio. A spacing H between adjacent resin injection ports 8 in a length direction of the first flow mesh 51 has a preset mapping relationship with a thickness D1 of a blade to be manufactured, and is inversely proportional to a thickness D2 of the structural fabric component 6. The spacing H satisfies: 500 mm ≤ H ≤ 10000 mm.

Taking the spar cap infusion module as an example, the length-to-width ratio of the first flow mesh 51 corresponds to dimensions of the structural fabric component of the spar cap. Since the thickness of the blade spar cap is not constant but varies non-linearly, the starting and ending areas of the blade spar cap are thinner, while the middle area of the blade spar cap is thicker. The starting point of the blade spar cap is defined as a blade root, and the end point of the blade spar cap is defined as a blade tip position. The structural fabric component 6 of the spar cap is formed by laminating fiber fabrics or sheets. When setting the positions of each resin injection port 8, the thickness of the corresponding structural fabric component 6 needs to be accounted for.

It can be understood that the spacing between adjacent resin injection ports 8 is inversely proportional to the thickness of the corresponding structural fabric component 6. At positions where the structural fabric component 6 is thicker, the resin injection ports 8 need to be arranged more densely, ensuring that more filler can be allocated to the thicker positions. Conversely, at positions where the structural fabric component 6 is thinner, the resin injection ports 8 may be arranged more sparsely, as only a small amount of filler is required at these thinner positions. It can be understood that when designing the spacing between the resin injection ports 8 on each protruding part of the first flow mesh 51, the thickness differences of the corresponding modules of the blade need to be accounted for, such that the areas of different thicknesses in the corresponding modules of the blade can all be allocated with an appropriate amount of filler. This ensures that the structural fabric component 6 is fully penetrated, infiltrated, and filled with the filler, thereby ensuring the infusion quality of each module of the blade.

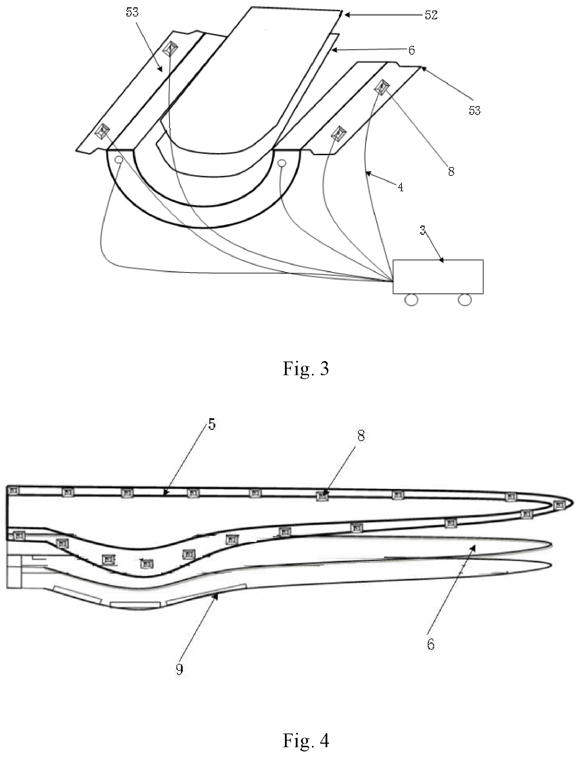

In some embodiments, as shown in Fig. 3, when arranging the blade resin injection assembly at a blade root area of the blade, one resin injection port 8 is provided at each of a leading edge and a trailing edge of a root flange. A spacing between adjacent resin injection ports 8 on each of a leading edge and a trailing edge of an end-surface flange ranges from 250 mm to 1000 mm. For cases where the corresponding structural fabric component 6 contains a large number of fiberglass layers, such as hundreds of the fiberglass layers, the spacing between adjacent resin injection ports 8 can be 250 mm, thereby ensuring that the fiberglass layers can be fully penetrated and filled with the resin. For cases where the corresponding structural fabric component contains a small number of fiberglass layers, such as a case where the number of fiberglass layers is a single digit, a spacing of 1000 mm between adjacent resin injection ports 8 is sufficient.

When arranging the blade resin injection assemblies for a blade shell skin and a blade shear web, a spacing between adjacent resin injection ports 8 on each of a leading edge and a trailing edge of each of a leading edge flange and a trailing edge flange ranges from 4000 mm to 8000 mm. It can be understood that the spacing between adjacent resin injection ports 8 is designed and manufactured by referring to the number of fiberglass layers contained in the structural fabric component 6 at the corresponding positions. As shown in Fig. 4, during a process of arranging the blade shell skin infusion system, a distribution layer 5 is laid on the upper side of the structural fabric component 6, and the distribution layer 5 is provided with multiple resin injection ports.

It can be understood that the resin injection ports 8 arranged at the leading edge and the resin injection ports 8 arranged at the trailing edge collaborate to supply the filler to the corresponding distribution layer 5 together. By jointly infusing filler from both sides of the distribution layer 5, with the resin injection ports 8 at the leading edge and the resin injection ports 8 at the trailing edge being symmetrically distributed, rapid and uniform diffusion of the filler within the distribution layer 5 can be ensured.

In some embodiments, as shown in Fig. 3, when arranging the blade resin injection assembly in the blade root area, the distribution layer includes a second flow mesh 52 and a flange flow mesh 53. The second flow mesh 52 is laid on an inner peripheral surface of a cavity, and the flange flow mesh 53 is laid on a surface of a frustum. The number of the flange flow meshes 53 is two. The two flange flow meshes 53 are symmetrical with respect to the second flow mesh 52. Both sides of the second flow mesh 52 in a width direction overlap the two flange flow meshes 53, respectively, by an overlap length ranging from 30 mm to 50 mm.

It can be understood that since the two flange flow meshes 53 and the second flow mesh 52 are overlapped, the filler injected into the flange flow mesh 53 and the second flow mesh 52 through different resin injection ports 8 can fluidly communicate with each other. In other words, the filler injected into the two flange flow meshes 53 can penetrate into the second flow mesh 52 and continue to penetrate into the structural fabric component located between the second flow mesh 52 and the inner wall of the cavity. It can be understood that by arranging a group of flange flow meshes 53 on each side of the second flow mesh 52, the speed and uniformity of filler immersing the corresponding structural fabric component can be improved.

In some examples, the filler can be epoxy resin or polyurethane resin or other types of resin. The position of the resin injection port 8 can be adjusted according to the product structure, and the spacing between the resin injection ports 8 is not limited to the above description. The distribution layer 5 is not necessarily a pultruded or woven flow mesh, and other special felts can also achieve the same effect after simple packaging and treatment. Therefore, the distribution layer 5 is a distribution medium with a distribution function.

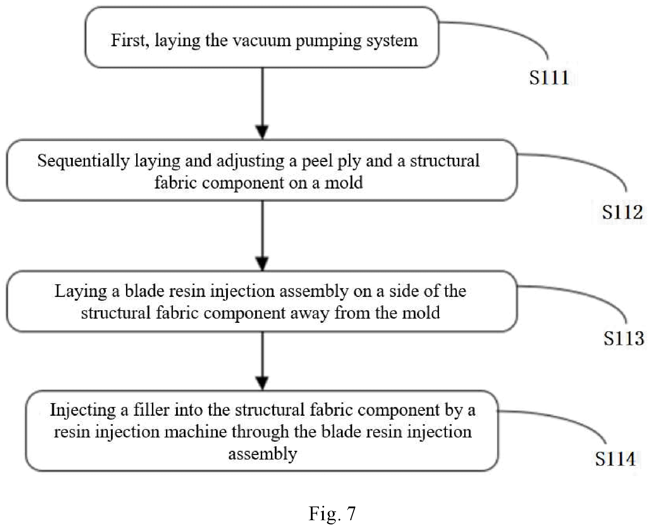

With reference to Fig. 6 and Fig. 7, some embodiments of the present disclosure provide a manufacturing method of a wind turbine blade. The manufacturing method includes steps S110 and S120:
At step S110, at least two to-be-spliced modules are constructed.
At step S120, the at least two to-be-spliced modules are spliced to form the wind turbine blade.

During the forming and manufacturing process of the wind turbine blade, the respective to-be-spliced modules are manufactured using the aforementioned manufacturing equipment. The manufacturing process of each module to be spliced adopts a "point + surface" infusion method, and thus eliminates the need to arrange channels, which is conducive to simplifying the layup process and saving materials. Moreover, since the filler directly enters the distribution layer through the resin injection connectors, there is no need to undergo the stage of flowing in channels, which can shorten the time required for the infusion forming process of each module to be spliced.

The constructing the at least two to-be-spliced modules at step S110 includes steps S111 to S114.

At step S111, first, the vacuum pumping system is laid.

At step S112, a peel ply and a structural fabric component are sequentially laid and adjusted on a mold.

At step S113, a blade resin injection assembly is laid on a side of the structural fabric component away from the mold.

At step S114: a filler is injected into the structural fabric component by the resin injection machine through the blade resin injection assembly.

In some embodiments, the vacuum pumping system at step S111 includes a vacuum film, a vacuum air guiding tube, and a vacuum auxiliary medium. The vacuum film is laid on the surface of the distribution layer 5 while covering the distribution layer 5. The vacuum auxiliary medium includes a release medium, a high-permeability distribution medium, an air guiding medium, etc. The vacuum pumping system is connected to vacuum pumping holes. The vacuum pumping holes can be use extraction holes on the mold (if the mold surface has its own vacuum holes), or can use vacuum pumping sources to be connected dispersedly. A minimum spacing for vacuum pumping is 300 mm, and a maximum spacing therefor is 2000 mm, which can be appropriately adjusted according to the structural design of different thicknesses.

Optionally, the vacuum pumping system surrounds a periphery of a mold or product contour to perform vacuum pumping.

Optionally, the vacuum pumping system is laid under the structural layer to perform unidirectional vacuum pumping. The vacuum pumping system can achieve "air extraction without resin extraction," meaning that when a vacuum environment is created through vacuum pumping, the infused resin colloid is not extracted through the vacuum pumping. The vacuum pumping system is mainly composed of various distribution media and a semi-permeable membrane.

Specifically, laying the vacuum pumping system includes following steps: (1) according to requirements for the starting point and the end point, placing the corresponding air extraction bags, adjusting the axial position of the air extraction bags, and fixing them with double-sided tapes, the starting point corresponding to the blade root position, and the end point corresponding to the blade tip position; and (2) evacuating the inside of the sealed vacuum bag film until the sealed cavity reaches a predetermined vacuum level.

During the infusion forming process of various modules of the wind turbine blade, vacuum negative pressure conditions need to be provided. In a vacuum negative pressure environment, the fiber fabric reinforced material (structural fabric component) in the sealed cavity is impregnated by the flow and penetration of the filler. Then, the filler impregnated in the structural fabric component 6 cures and forms.

When establishing various modules of the wind turbine blade, the laying position of the vacuum pumping system is different, specifically as follows:
(1) when establishing the spar cap infusion module, the vacuum pumping system is laid at the bottom of the spar cap;
(2) when establishing the blade root infusion module, the vacuum pumping system is laid at the bottom of the prefabricated blade root along the circumferential direction from the starting position of the prefabricated blade root to the position at 15% of axial length of the blade;
(3) when establishing the shear web infusion module, the vacuum pumping system is arranged along the contour edge of the shear web; and
(4) When establishing the shell skin infusion module, the vacuum pumping system is laid at the bottom of the balsa wood material area at 10% to 25% of axial length of the blade and at the bottom of the spar cap.

In some embodiments, step S112 includes:
(1) when constructing the spar cap infusion module, the structural fabric component 6 is a unidirectional fabric layer/sheet on the spar cap;
(2) when constructing the blade root infusion module, the structural fabric component 6 is a prefabricated blade root structural ply layer; and
(3) when constructing the shear web infusion module and the shell skin infusion module, the structural fabric component 6 is core material and glass fiber.

The method of laying and adjusting the peel ply includes following steps:
(1) unfolding the peel ply;
(2) adjusting the axial position of the peel ply and preliminarily fixing the position of the peel ply;
(3) then adjusting the chordwise width on both sides of the peel ply such that the peel ply can cover the entire structural fabric component 6; and
(4) further adjusting the flatness of the peel ply until the peel ply is firmly attached to the corners of the cavity, and the surface of the peel ply has no wrinkles and voids.

The method of laying and adjusting the structural fabric component 6 is the same as the method of laying and adjusting the peel ply.

In some embodiments, step S113 includes:
(1) when constructing the blade root infusion module, shear web infusion module, and shell skin infusion module, directly laying the distribution layer 5 on the surface of the structural fabric component 6, where the method of laying and adjusting the distribution layer 5 is the same as the method of laying and adjusting the structural fabric component 6; and
(2) when constructing the spar cap infusion module, first laying a second layer of peel ply on the surface of the structural fabric component 6, and then laying the distribution layer 5 on the surface of the second layer of peel ply, where the method of laying and adjusting the second layer of peel ply and the distribution layer 5 is the same as the method of laying and adjusting the structural fabric component 6.

In some embodiments, at step S114, after the aforementioned steps are completed, the filler is injected using the resin injection machine 3. Under the action of injection pressure and vacuum negative pressure, the filler sequentially flows through the storage part 1, the discharge pipe 2, the distribution layer 5, and then penetrates, impregnates and fills the structural fabric component 6. During the curing and exothermic forming stage of the filler, the entire sealed cavity continues to maintain a relatively high vacuum level. Under room temperature or heated conditions, the filler undergoes a curing and cross-linking reaction to obtain a product preform.

Some embodiments of the present disclosure provide a wind turbine blade, which is manufactured using the above manufacturing method. During the manufacturing process of the wind turbine blade, a point-to-surface infusion configuration of "resin injection port + distribution layer" is adopted, thereby solving the problem that the infusion processes of the current wind turbine blade heavily rely on the channel.

In summary, the present disclosure provides the wind turbine blade, the manufacturing equipment for the wind turbine blade, and a manufacturing method of the wind turbine blade. With the reasonable design of the resin injection port 8 with a certain capacity and the distribution layer 5, the operation of arranging channels during the manufacturing process of large wind turbine blade components and shells is eliminated. The resin injection port 8 is placed on the flange plane of the mold 7 and connected through an extended part of the distribution layer 5, causing the resin to flow in a specified direction, thereby replacing the original channels. By disposing the resin injection port 8 on the flange surface of the mold 7, the number of resin injection ports 8 can be effectively reduced, which is more conducive for operators to monitor the infusion process. The resin injection ports 8 are arranged more densely compared with the related art, with all resin injection ports 8 distributed on mold ridges, which is conducive to supervision and prevention of the occurrence of infusion quality defects. At the same time, when the distribution layer 5 receives the resin transferred from the resin injection port 8, with no need for special control of the corresponding flow sequence, the resin can be uniformly dispersed over the entire distribution layer 5 and permeate downwards overall in the thickness direction of the blade, thereby eliminating defects such as air entrapment and whitening caused by improper operation of tube switching in the axial runner. Since the technical solution of the present disclosure does not involve excessive channel design, resin waste can be greatly reduced, and material utilization can be improved. The resin injection ports 8 are all placed in the frustum areas and the end face areas of the blade root leading and trailing edges, thereby substantially eliminating the need for workers to perform high-altitude operations in the cavity, and also preventing defects such as wrinkling or displacement of the preform due to being stepped on, which is conducive to improvement in the product quality.

The reference to "embodiment" in the present disclosure signifies that a particular feature, structure, or characteristic described in connection with the embodiment may be included in at least one embodiment of the present disclosure. The appearances of this phrase in various places in the specification are not necessarily all referring to the same embodiment, nor are they independent or alternative embodiments mutually exclusive of other embodiments.

It should also be noted that, in the description of the present disclosure, unless specified or limited otherwise, the terms "mounted," "coupled," "connected," are used broadly. The terms may indicate, for example, fixed connections, detachable connections, or integral connections, may also indicate mechanical or direct connections or indirect connections via intermediate mediums, and may also indicate inner communications of two elements or the interaction between two elements. The specific meanings of the terms in embodiments of the present disclosure may be understood by those skilled in the art according to particular circumstances.

In the embodiments of the present disclosure, the same reference numerals denote the same components, and for the sake of brevity, detailed descriptions of the same components are omitted in different embodiments. It should be understood that the dimensions such as thickness, length, and width of various components in the embodiments of the present disclosure shown in the drawings, as well as the overall thickness, length, and width dimensions of the integrated device, are merely exemplary illustrations and should not constitute any limitation on the present disclosure.

"Multiple" appearing in the present disclosure refers to two or more (including two).

Although the present disclosure has been described with reference to preferred embodiments, various modifications can be made thereto, and parts thereof can be replaced with equivalents without departing from the scope of the present disclosure. In particular, as long as there is no structural conflict, the various technical features mentioned in the respective embodiments can be combined in any manner. The present disclosure is not limited to the specific embodiments disclosed herein, but includes all technical solutions falling within the scope of the claims.

## Claims

1. A manufacturing equipment for a wind turbine blade, comprising:
a blade resin injection assembly, comprising:
a resin injection connector group, comprising at least one resin injection connector, each of the at least one resin injection connector comprising a storage part (1) and a discharge pipe (2) connected to each other, the storage part being connected to a resin injection machine (3), the resin injection machine being configured to inject a filler into the storage part (1) through a connecting tube (4); and
a distribution layer group, comprising at least one distribution layer (5), each of the at least one distribution layer (5) being laid on a surface of a structural fabric component (6), having an edge corresponding to one resin injection connector of the at least one resin injection connector, and being directly connected to the resin injection connector.

2. The manufacturing equipment for the wind turbine blade according to claim 1, wherein
the blade resin injection assembly further comprises an insulation layer sandwiched between the at least one distribution layer (5) and the structural fabric component (6), and
the storage part (1) has a certain volume and is configured to store a corresponding volume of the filler in such a manner that the filler smoothly passes through the at least one distribution layer and the insulation layer in sequence at a uniform speed.

3. The manufacturing equipment for the wind turbine blade according to claim 1 or 2, further comprising:
a mold group, comprising at least two molds (7), the distribution layer group conformably being laid in cavities of the at least two molds (7), and the resin injection connector group being disposed at an end of the distribution layer group that extends along free ends of the at least two molds (7).

4. The manufacturing equipment for the wind turbine blade according to claim 1, wherein the distribution layer comprises:
a first flow mesh (51), the filler sequentially flowing through the storage part (1), the discharge pipe (2), and the first flow mesh (51) in the blade resin injection assembly, and the filler gradually permeating through the first flow mesh (51) after entering the first flow mesh (51), and then uniformly dispersing over an entirety of the first flow mesh (51).

5. The manufacturing equipment for the wind turbine blade according to claim 4, wherein the first flow mesh (51) comprises:
a main body, and
protruding parts each protruding outward from a peripheral edge of the main body, the protruding parts being spaced apart from each other along a peripheral of the main body; the protruding parts being provided with resin injection ports (8), respectively; the resin injection connector group comprising a plurality of the resin injection connectors in one-to-one correspondence with the resin injection ports (8) and directly connected to the resin injection ports (8), respectively; and the protruding parts each having a size of 150 mm * 200 mm.

6. The manufacturing equipment for the wind turbine blade according to claim 5, wherein
the first flow mesh (51) is a two-dimensional structure having a preset length-to-width ratio, and
a spacing H between adjacent ones of the resin injection ports (8) in a length direction of the first flow mesh has a preset mapping relationship with a thickness D1 of a blade to be prepared and is inversely proportional to a thickness D2 of the structural fabric component (6), where the spacing H satisfies: 500 mm ≤ H ≤ 10000 mm.

7. The manufacturing equipment for the wind turbine blade according to claim 5, wherein the manufacturing equipment for the wind turbine blade comprises a plurality of the blade resin injection assemblies;
a blade resin injection assembly of the plurality of the blade resin injection assemblies in a blade root area of the blade is arranged in such a manner that each of a leading edge and a trailing edge of a root flange is provided with one of the resin injection ports (8), and a spacing between adjacent ones of the resin injection ports (8) at each of a leading edge and a trailing edge of an end-surface flange ranges from 250 mm to 1000 mm; and
the blade resin injection assemblies of the plurality of the blade resin injection assemblies for a blade shell skin and a blade shear web are arranged in such a manner that a spacing between adjacent ones of the resin injection ports (8) at each of a leading edge and a trailing edge of each of a leading edge flange and a trailing edge flange ranges from 4000 mm to 8000 mm.

8. The manufacturing equipment for the wind turbine blade according to claim 1 or 4, wherein the blade resin injection assembly in a blade root area of the blade is arranged, and the distribution layer comprises a second flow mesh (52) and two flange flow meshes (53); and
the second flow mesh (52) is laid on an inner peripheral surface of a cavity, the two flange flow meshes (53) are laid on surfaces of a frustum and are symmetrical with respect to the second flow mesh (52), and two sides of the second flow mesh (52) overlap the two flange flow meshes (53) in a width direction of the second flow mesh (52), respectively, by an overlap length ranging from 30 mm to 50 mm.

9. A manufacturing method of a wind turbine blade, comprising:
constructing at least two to-be-spliced modules; and
splicing the at least two to-be-spliced modules to form the wind turbine blade,
wherein, said constructing the at least two to-be-spliced modules is performed by the manufacturing equipment according to any one of claims 1 to 8 and comprises:
first, laying a vacuum pumping system (9);
then, sequentially laying and adjusting a peel ply and the structural fabric component (6) on a mold (7);
laying the blade resin injection assembly on a side of the structural fabric component (6) away from the mold (7); and
injecting the filler into the structural fabric component (6) by the resin injection machine (3) through the blade resin injection assembly, the filler being resin.

10. A wind turbine blade, manufactured using the manufacturing method according to claim 9.
